(19) Europäisches Patentamt / European Patent Office / Office européen des brevets

(11) **EP 3 191 617 B1**

(12) **FASCICULE DE BREVET EUROPEEN**

(45) Date de publication et mention de la délivrance du brevet:
**31.10.2018 Bulletin 2018/44**

(21) Numéro de dépôt: **15771680.4**

(22) Date de dépôt: **10.09.2015**

(51) Int Cl.:
*C23C 22/77* (2006.01)       *C25D 11/24* (2006.01)
*G01J 3/46* (2006.01)        *G01J 3/50* (2006.01)

(86) Numéro de dépôt international:
**PCT/FR2015/052411**

(87) Numéro de publication internationale:
**WO 2016/038306 (17.03.2016 Gazette 2016/11)**

(54) **PROCEDE DE CONTROLE D'UNE PIECE PAR COLORIMETRIE**

VERFAHREN ZUR ÜBERWACHUNG EINES TEILS ÜBER KOLORIMETRIE

METHOD FOR MONITORING A PART VIA COLORIMETRY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2014 FR 1402041**

(43) Date de publication de la demande:
**19.07.2017 Bulletin 2017/29**

(73) Titulaire: **ArianeGroup SAS**
**75015 Paris (FR)**

(72) Inventeurs:
• **PERON, Maxime**
  **33600 Pessac (FR)**
• **BETAILLE-FRANCOUAL, Marie**
  **33185 LE HAILLAN (FR)**

(74) Mandataire: **Laïk, Eric et al**
**Cabinet Beau de Loménie**
**158, rue de l'Université**
**75340 Paris Cedex 07 (FR)**

(56) Documents cités:
WO-A1-2007/134152       JP-A- H1 143 779
US-A1- 2011 033 629       US-B1- 6 663 700

**Description**

Arrière-plan de l'invention

L'invention concerne des procédés de fabrication et de contrôle de pièces présentant une couche obtenue par conversion chimique.

Il est connu de réaliser des traitements de conversion chimique sur la surface de substrats d'aluminium. Les revêtements obtenus après de tels traitements peuvent avoir une épaisseur relativement faible, inférieure à quelques centaines de nanomètres. De tels revêtements peuvent être relativement difficiles à détecter par les technologies usuelles du fait de leur faible épaisseur.

Par ailleurs, le règlement « Enregistrement, évaluation et autorisation des produits chimiques » (« registration, evaluation and authorisation of chemicals », REACh) impose de modifier certains des procédés de conversion chimique existants afin de s'affranchir de l'utilisation de chrome au degré d'oxydation +VI. Afin de se conformer à ce règlement, de nouveaux traitements de conversion chimique à base de chrome au degré d'oxydation +III ont été développés.

Les revêtements obtenus suite à la mise en oeuvre des nouveaux procédés de conversion chimique à base de chrome au degré d'oxydation +III peuvent être relativement peu colorés et présenter à l'oeil nu un aspect très proche de l'aspect du substrat traité ou d'éventuels autres revêtements présents sur ce dernier. Ce fait peut rendre la détection de tels revêtements de conversion chimique encore plus difficile à réaliser. Ainsi, en particulier, des opérations de retouche par conversion chimique à partir de chrome au degré d'oxydation +III effectuées sur des pièces traitées au préalable par oxydation anodique ou conversion chimique peuvent ne pas être facilement détectables. Cela peut dès lors engendrer un rallongement du temps de contrôle de la pièce obtenue, voire même un risque de potentielle détérioration de celle-ci si la pièce venait à être considérée comme nécessitant la mise en oeuvre de traitements supplémentaires.

Il existe, par conséquent, un besoin pour disposer d'un nouveau procédé de détection d'une couche de conversion chimique obtenue par traitement d'un substrat par du chrome au degré d'oxydation +III.

WO-A-2007/134152 décrit un procédé de fabrication des pièces en aluminium utilisant une solution de conversion chimique à base de chrome (III). La présence de la couche sur la surface est vérifiée par spectroscopie des rayons X. Il existe, en outre, un besoin pour disposer d'un nouveau procédé de détection d'une telle couche de conversion chimique qui soit simple et rapide d'utilisation et qui permette un contrôle non destructif des pièces.

Objet et résumé de l'invention

A cet effet, l'invention propose, selon un premier aspect, un procédé de fabrication et de contrôle d'une pièce, le procédé comportant les étapes suivantes :

a) traitement d'un substrat comportant de l'aluminium par un procédé de conversion chimique mettant en oeuvre une solution de traitement comportant du chrome au degré d'oxydation +III afin d'obtenir une pièce présentant une couche de conversion chimique, et

b) contrôle de la présence de la couche de conversion chimique obtenue lors de l'étape a) par mesure, à l'aide d'un colorimètre, de la couleur de ladite couche de conversion chimique et comparaison de cette couleur mesurée avec une couleur de référence.

L'invention fournit une méthode de contrôle simple permettant de vérifier rapidement et de manière fiable la bonne réalisation du traitement de conversion chimique lors de l'étape a). L'invention permet ainsi de clairement établir si le traitement de conversion chimique de l'étape a) a été réalisé et donc de s'affranchir d'opérations de traitement de la pièce supplémentaires et superflues, ce qui permet d'accélérer et de simplifier le traitement de la pièce. La couche de conversion chimique obtenue lors de l'étape a) a une épaisseur relativement faible, par exemple inférieure ou égale à 500 nm, et l'invention permet ainsi de disposer d'une méthode simple et rapide permettant de détecter la présence d'un tel revêtement de faible épaisseur.

Les procédés de conversion chimique utilisables lors de l'étape a) sont connus de l'homme du métier. A titre d'exemple, on peut citer comme solutions de traitement utilisables les solutions commerciales suivantes : SurTec® 650, SurTec® 650 V et LANTHANE 613.3.

Le substrat traité lors de l'étape a) peut comporter un alliage d'aluminium, par exemple choisi par les alliages d'aluminium 2024, 5086, 7010 et AS7G0,3.

Dans un exemple de réalisation, un revêtement initial d'oxydation anodique ou de conversion chimique peut être formé sur le substrat avant l'étape a), et la couche de conversion chimique obtenue lors de l'étape a) peut être adjacente au revêtement initial. En particulier, le revêtement initial peut après l'étape a) entourer tout ou partie de la couche de conversion chimique obtenue lors de l'étape a).

Le revêtement initial peut être formé par tout type d'oxydation anodique ou de conversion chimique. On peut, par exemple, le former par mise en oeuvre d'une conversion chimique telle que décrite plus haut ou par une oxydation anodique sulfurique (OAS), une oxydation anodique chromique (OAC), une oxydation anodique sulfotartrique (OAST) ou une oxydation anodique sulfo-phosphorique (OASP).

Dans un exemple de réalisation, le traitement de conversion chimique effectué lors de l'étape a) peut être une opération de retouche durant laquelle la solution de traitement est appliquée localement sur le substrat à l'aide d'un applicateur.

L'applicateur utilisé dans le traitement de retouche peut par exemple être un pinceau permettant d'imprégner la surface traitée avec la solution de traitement.

Dans un exemple de réalisation, le colorimètre peut se présenter sous la forme d'une pièce à main.

Il est avantageux d'utiliser un colorimètre portatif afin de faciliter le contrôle réalisé et d'améliorer sa rapidité d'exécution.

Le colorimètre peut par exemple être un spectrocolorimètre. On peut par exemple utiliser le spectrocolorimètre commercialisé sous la référence CM-700d par la société Konica Minolta.

Dans un exemple de réalisation, la couleur de référence peut être mémorisée avant l'étape b) dans un support de stockage de données.

Dans une telle configuration, il n'est pas nécessaire de mesurer la couleur de référence lors de l'étape b), celle-ci étant déjà en mémoire. Ainsi, cette configuration permet avantageusement au colorimètre de ne mesurer lors de l'étape b) que la couleur de la couche de conversion chimique obtenue lors de l'étape a). Un tel mode de réalisation permet par conséquent de réduire le nombre de mesures de couleur effectuées par le colorimètre lors de l'étape b) et donc d'améliorer encore la rapidité du procédé de contrôle mis en oeuvre.

Le support de stockage de données peut être intégré au colorimètre. En variante, le support de stockage est intégré à un système informatique distinct du colorimètre, le colorimètre étant configuré pour échanger des données avec ce système informatique, par exemple par le biais d'un réseau d'échange de données sans fil.

En variante, la couleur de référence peut être mesurée par le colorimètre lors de l'étape b). Dans ce cas, le colorimètre effectue lors de l'étape b) la mesure de la couleur de la couche de conversion chimique obtenue lors de l'étape a) et la mesure de la couleur de référence, ces deux couleurs mesurées étant ensuite comparées.

Bien entendu, on peut lors de l'étape b) contrôler successivement une pluralité de pièces, ces pièces pouvant ou non avoir été obtenues par mise en oeuvre d'une même étape a).

Les couleurs mesurées ou utilisées par le colorimètre lors de l'étape b) peuvent être définies dans l'espace de couleur L*a*b*. Dans ce cas, les couleurs sont définies par trois composantes, à savoir : la composante de clarté L*, la composante chromatique rouge-vert a* et la composante chromatique jaune-bleu b*. Lorsque deux couleurs sont définies dans l'espace L*a*b*, il est possible de les comparer lors de l'étape b) en calculant l'écart colorimétrique $\Delta E^*_{ab}$ entre

ces deux couleurs par application de la formule suivante : $\Delta E^*_{ab} = \sqrt{\Delta L^{*2} + \Delta a^{*2} + \Delta b^{*2}}$. Bien entendu, on ne sort pas du cadre de l'invention lorsque les couleurs sont, lors de l'étape b), définies dans un espace de couleur différent de l'espace L*a*b*.

La mesure ou les mesures de couleur(s) effectuée(s) par le colorimètre lors de l'étape b) peut (peuvent) être effectuée(s) en réflexion spéculaire incluse (mode de mesure « SCI »). En variante, cette ou ces mesures de couleur(s) peut(peuvent) être effectuée(s) en réflexion spéculaire exclue (mode de mesure « SCE »).

Sauf mention contraire, la couleur d'une zone mesurée par le colorimètre lors de l'étape b) correspond à la moyenne arithmétique des couleurs mesurées sur cinq points de ladite zone. Par exemple, lorsqu'une couleur d'une zone mesurée lors de l'étape b) est définie dans l'espace L*a*b*, les composantes L*, a* et b* de cinq points de ladite zone sont d'abord mesurées puis ces composantes sont moyennées sur les différents points de mesure afin d'en déduire la couleur de ladite zone.

Dans un exemple de réalisation, la couleur de référence peut correspondre à la couleur d'une couche de conversion chimique de référence formée selon l'étape a) (i.e. sur un substrat de même nature chimique et par le même traitement de conversion chimique que dans l'étape a)). Dans ce cas, lorsque les couleurs sont définies dans l'espace L*a*b*, on peut considérer que l'étape a) a été correctement réalisée si l'on obtient lors de l'étape b) un écart colorimétrique $\Delta E^*_{ab}$ inférieur ou égal à une valeur prédéfinie fonction du substrat et du traitement de surface réalisé, par exemple inférieur ou égal 4, par exemple inférieur ou égal à 3,5.

En variante, la couleur de référence peut correspondre à la couleur d'une couche de référence obtenue par mise en oeuvre d'un traitement différent de celui de l'étape a). Dans ce cas, lorsque les couleurs sont définies dans l'espace L*a*b*, on pourra évaluer lors de l'étape b) si l'écart colorimétrique $\Delta E^*_{ab}$ est proche d'une valeur prédéfinie afin de déterminer si l'étape a) a été correctement réalisée.

Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :

- la figure 1 représente de manière très schématique et partielle une vue de dessus d'un exemple de pièce obtenue après mise en oeuvre d'une étape a) selon l'invention, et
- la figure 2 représente de manière très schématique et partielle une vue de dessus d'un autre exemple de pièce obtenue après mise en oeuvre d'une étape a) selon l'invention.

Exemples

*Exemple 1 : étape a) effectuée après réalisation d'un revêtement initial par conversion chimique*

Dans cet exemple, un substrat en alliage d'aluminium 5086 a tout d'abord été revêtu par un revêtement initial obtenu par immersion du substrat dans une solution de traitement SurTec® 650.

On a ensuite réalisé une étape a) selon l'invention dans laquelle un traitement de conversion chimique de retouche a été réalisé après formation du revêtement initial. La solution de traitement utilisée durant cette étape a) est commercialisée sous la dénomination SurTec® 650 et a été appliquée au stick.

Une zone adjacente à la zone traitée par le traitement de retouche a été décapée.

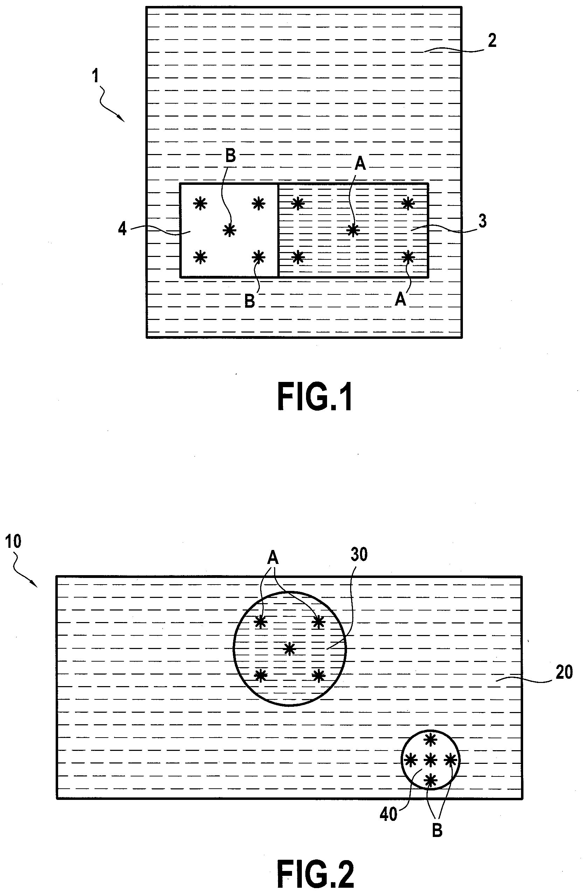

La figure 1 représente très schématiquement une vue de dessus de la pièce 1 ainsi obtenue. En lien avec cette figure, le revêtement initial est représenté par le symbole 2, la zone retouchée par conversion chimique par le symbole 3 et la zone décapée par le symbole 4. Comme illustré, la couche 3 de conversion chimique obtenue lors de l'étape a) est adjacente au revêtement initial 2, le revêtement initial 2 entourant la couche 3.

A l'oeil nu, les zones retouchée 3 et décapée 4 sont très peu distinguables l'une de l'autre.

Les mesures de l'étape b) ont été effectuées avec le colorimètre Konica Minolta CM-700d en mode SCI (Composante spéculaire incluse). Le référentiel de couleur CIE Lab a été utilisé.

Comme illustré à la figure 1, pour chacune des zones dont la couleur a été mesurée lors de l'étape b), les composantes $L^*$, $a^*$ et $b^*$ ont été mesurées au niveau de cinq points de chacune de ces zones, les résultats obtenus ont ensuite été moyennés sur ces cinq points (moyenne arithmétique) afin de déterminer la couleur de la zone en question. On a schématisé à la figure 1 les points de mesure A de la zone 3 retouchée par conversion chimique et les points de mesure B de la zone décapée 4.

Dans un premier temps, la couleur d'une zone de référence a été évaluée, cette couleur correspond à la couleur de référence. La zone de référence correspond à une couche de conversion chimique de référence formée selon l'étape a) du présent exemple i.e. sur un alliage 5086 et par le même traitement de conversion chimique.

On obtient après calcul d'une moyenne sur cinq points de mesure une couleur de référence présentant les composantes colorimétriques détaillées dans le tableau 1 ci-dessous.

Tableau 1

|  | $L^*$ | $a^*$ | $b^*$ |
|---|---|---|---|
| **Couleur de référence** | 84,12 | 0,09 | -2,09 |

Dans un deuxième temps, les couleurs de la couche de conversion chimique obtenue lors de l'étape a) et de la zone décapée ont été mesurées.

On obtient après calcul d'une moyenne sur cinq points de mesure pour chacune de ces zones les résultats détaillés dans le tableau 2 ci-dessous. Pour chacune des deux zones, les écarts colorimétriques avec la couleur de référence sont fournis à la colonne $\Delta E^*ab$.

Tableau 2

|  | $L^*$ | $a^*$ |  | $\Delta E^*ab$ |
|---|---|---|---|---|
| **zone décapée** | 88,89 | -0,05 | 0,64 | **5,50** |
| **Couche de conversion chimique obtenue lors de l'étape a)** | 83,69 | 0,14 | -1,56 | **0,69** |

On obtient un écart colorimétrique significatif entre la couleur de la zone décapée et la couleur de référence (5,50), ce qui montre que la méthode selon l'invention permet de différencier deux surfaces différentes d'aspect pourtant similaire à l'oeil nu. En outre, l'écart colorimétrique entre la couleur de la couche de conversion chimique obtenue lors de l'étape a) et la couleur de référence est faible (0,69). Une telle valeur de l'écart colorimétrique permet de confirmer que l'étape a) a été correctement réalisée.

*Exemple 2 : étape a) effectuée après réalisation d'un revêtement initial par anodisation*

Dans cet exemple, un substrat en alliage d'aluminium 7010 a tout d'abord été revêtu par un revêtement initial obtenu par mise en oeuvre d'une oxydation anodique chromique mettant en oeuvre du chrome au degré d'oxydation +VI.

On a ensuite réalisé une étape a) selon l'invention dans laquelle un traitement de conversion chimique de retouche a été réalisé après formation du revêtement initial. La solution de traitement utilisée durant cette étape a) est commercialisée sous la dénomination SurTec® 650 et a été appliquée au stick.

Une zone distincte de celle traitée par le traitement de retouche a été décapée.

La figure 2 représente très schématiquement une vue de dessus de la pièce 10 ainsi obtenue. En lien avec cette figure, le revêtement initial est représenté par le symbole 20, la zone retouchée par conversion chimique par le symbole 30 et la zone décapée par le symbole 40. Comme illustré, la couche 30 de conversion chimique obtenue lors de l'étape a) est adjacente au revêtement initial 20, le revêtement initial 20 entourant la couche 30.

A l'oeil nu, les zones retouchée et décapée sont très peu distinguables l'une de l'autre.

Les mesures de l'étape b) ont été effectuées avec le colorimètre Konica Minolta CM-700d en mode SCI (Composante spéculaire incluse). Le référentiel de couleur CIE Lab a été utilisé.

Comme illustré à la figure 2, pour chacune des zones dont la couleur a été mesurée lors de l'étape b), les composantes $L^*$, $a^*$ et $b^*$ ont été mesurées au niveau de cinq points de chacune de ces zones, les résultats obtenus ont ensuite été moyennés sur ces cinq points (moyenne arithmétique) afin de déterminer la couleur de la zone en question. On a schématisé à la figure 2 les points de mesure A de la zone 30 retouchée par conversion chimique et les points de mesure B de la zone décapée 40.

Dans un premier temps, la couleur d'une zone de référence a été évaluée, cette couleur correspond à la couleur de référence. La zone de référence correspond à une couche de conversion chimique de référence formée selon l'étape a) du présent exemple i.e. sur un alliage 7010 et par le même traitement de conversion chimique.

On obtient après calcul d'une moyenne sur cinq points de mesure une couleur de référence présentant les composantes colorimétriques détaillées dans le tableau 3 ci-dessous.

Tableau 3

|  | $L^*$ | $a^*$ | $b^*$ |
|---|---|---|---|
| **Couleur de référence** | 81,57 | 0,24 | -1,64 |

Dans un deuxième temps, les couleurs de la couche de conversion chimique obtenue lors de l'étape a) et de la zone décapée ont été mesurées.

On obtient après calcul d'une moyenne sur cinq points de mesure pour chacune de ces zones les résultats détaillés dans le tableau 4 ci-dessous. Pour chacune des deux zones, les écarts colorimétriques avec la couleur de référence sont fournis à la colonne $\Delta E^*ab$.

Tableau 4

|  | $L^*$ | $a^*$ | $b^*$ | $\Delta E^*ab$ |
|---|---|---|---|---|
| **Zone décapée** | 79 | -0,01 | 0,86 | **3,74** |
| **Couche de conversion chimique obtenue lors de l' etape a)** | 82,50 | 0,35 | -1,28 | **1,00** |

On obtient un écart colorimétrique significatif entre la couleur de la zone décapée et la couleur de référence (3,74), ce qui signifie que les surfaces sont différentes. En outre, l'écart colorimétrique mesuré entre la couleur de la couche de conversion chimique obtenue lors de l'étape a) et la couleur de référence est faible (1,00). Une telle valeur de l'écart colorimétrique permet de confirmer que l'étape a) a correctement été réalisée.

L'expression « comportant/contenant/comprenant un(e) » doit se comprendre comme « comportant/contenant/comprenant au moins un(e) ».

L'expression « compris(e) entre ... et ... » ou « allant de ... à ... » doit se comprendre comme incluant les bornes.

**EP 3 191 617 B1**

## Revendications

**1.** Procédé de fabrication et de contrôle d'une pièce (1 ; 10), le procédé comportant les étapes suivantes :

a) traitement d'un substrat comportant de l'aluminium par un procédé de conversion chimique mettant en oeuvre une solution de traitement comportant du chrome au degré d'oxydation +III afin d'obtenir une pièce (1 ; 10) présentant une couche de conversion chimique (3 ; 30), et
b) contrôle de la présence de la couche (3 ; 30) de conversion chimique obtenue lors de l'étape a) par mesure, à l'aide d'un colorimètre, de la couleur de ladite couche de conversion chimique (3 ; 30) et comparaison de cette couleur mesurée avec une couleur de référence.

**2.** Procédé selon la revendication 1, **caractérisé en ce qu'**un revêtement initial (2 ; 20) d'oxydation anodique ou de conversion chimique est formé sur le substrat avant l'étape a), et **en ce que** la couche (3 ; 30) de conversion chimique obtenue lors de l'étape a) est adjacente au revêtement initial (2 ; 20).

**3.** Procédé selon l'une quelconque des revendications 1 et 2, **caractérisé en ce que** le traitement de conversion chimique effectué lors de l'étape a) est une opération de retouche durant laquelle la solution de traitement est appliquée localement sur le substrat à l'aide d'un applicateur.

**4.** Procédé selon l'une quelconque des revendications 1 à 3, **caractérisé en ce que** le colorimètre se présente sous la forme d'une pièce à main.

## Patentansprüche

**1.** Verfahren zur Herstellung und Prüfen eines Teils (1; 10), wobei das Verfahren die folgenden Schritte aufweist:

a) Behandeln eines Substrats, das Aluminium umfasst, durch ein chemisches Umwandlungsverfahren unter Verwendung einer Aufbereitungslösung, die Chrom in der Oxidationsstufe +III umfasst, um ein Teil (1; 10) zu erhalten, das eine chemische Umwandlungsschicht (3; 30) aufweist, und
b) Prüfen des Vorhandenseins der chemischen Umwandlungsschicht (3; 30), die in Schritt a) erhaltenen wird, durch Messen der Farbe der chemischen Umwandlungsschicht (3; 30) mit Hilfe eines Colorimeters und Vergleichen dieser gemessenen Farbe mit einer Referenzfarbe.

**2.** Verfahren gemäß Anspruch 1, **dadurch gekennzeichnet, dass** vor dem Schritt a) auf dem Substrat eine anfängliche anodische Oxydationsbeschichtung (2; 20) oder chemische Umwandlungsbeschichtung gebildet wird, und dass die chemische Umwandlungsschicht (3; 30), die in Schritt a) erhalten wird, an die anfängliche Beschichtung (2; 20) angrenzt.

**3.** Verfahren gemäß einem der Ansprüche 1 und 2, **dadurch gekennzeichnet, dass** die chemische Umwandlungsbehandlung, die in Schritt a) durchgeführt wird, ein Ausbesserungsvorgang ist, bei dem die Aufbereitungslösung mit Hilfe eines Applikators lokal auf das Substrat aufgebracht wird.

**4.** Verfahren gemäß einem der Ansprüche 1 bis 3, **dadurch gekennzeichnet, dass** das Colorimeter als Handstück ausgebildet ist.

## Claims

**1.** A method of fabricating and inspecting a part (1; 10), the method comprising the following steps:

a) treating a substrate including aluminum by a chemical conversion method making use of a treatment solution including chromium with a degree of oxidation of +III in order to obtain a part (1; 10) presenting a chemical conversion layer (3; 30); and
b) inspecting the presence of the chemical conversion layer (3; 30) obtained during step a) by using a colorimeter to measure the color of said chemical conversion layer (3; 30) and by comparing the measured color with a reference color.

**2.** A method according to claim 1, **characterized in that** an initial anodic oxidation or chemical conversion coating (2; 20) is formed on the substrate before step a), and **in that** the chemical conversion layer (3; 30) obtained during step a) is adjacent to the initial coating (2; 20).

**3.** A method according to claim 1 or claim 2, **characterized in that** the chemical conversion treatment performed during step a) is a reworking operation during which the treatment solution is applied locally on the substrate by means of an applicator.

**4.** A method according to any one of claims 1 to 3, **characterized in that** the colorimeter is in the form of a handheld tool.

**FIG.1**

**FIG.2**

## RÉFÉRENCES CITÉES DANS LA DESCRIPTION

**Documents brevets cités dans la description**

- WO 2007134152 A